# EUROPEAN PATENT APPLICATION

(11) **EP 2 072 129 A2**
(43) Date of publication of application: **24.06.2009**
(21) Application number: 08021172.5
(22) Date of filing: 05.12.2008
(51) Int. Cl.: B01J 35/00, B01J 37/00

(54) **Production process of oxidation catalyst apparatus for purifying exhaust gas**

(30) Priority: 06.12.2007 JP 2007316337
(71) Applicant: Honda Motor Co., Ltd., Minato-ku Tokyo 107-8556 (JP)
(72) Inventor: Tanaami, Kiyoshi, Wako-shi Saitama 351-0193 (JP); Isogai, Yuji, Wako-shi Saitama 351-0193 (JP)
(74) Representative: Prechtel, Jörg

(57) **Abstract**

To provide a production process of an oxidation catalyst apparatus for purifying an exhaust gas which enables to oxidize and purify particulate matter in the exhaust gas of an internal combustion engine at a lower temperature. The production process of the oxidation catalyst apparatus 1 for purifying an exhaust gas comprises a step of burning a plurality of metal compounds to obtain a burnt product, a step of mixing and grinding the obtained burnt product with water and a binder which is a sol comprising zirconia to prepare a slurry, a step of applying the slurry to a porous filter base material 2, and a step of burning the porous filter base material 2 to form a porous catalyst layer 3 supported on the porous filter base material 2. The porous catalyst layer 3 has a thickness in a range of 10 to 150 µm and fine pores having a diameter in a range of 0.01 to 5 µm, the total porosity of and the porous filter base material 2 and the porous catalyst layer 3 have a porosity of 35 to 70% as a whole. The porous catalyst layer 3 is a composite metal oxide represented by general formula Y₁₋ₓAgₓMn_{1-y}Ru_{y}O₃ wherein 0.01 ≤ x ≤ 0.15 and 0.005 ≤ y ≤ 0.2.

## Description

### BACKGROUND OF THE INVENTION

### Field of the Invention

The present invention relates to a production process of an oxidation catalyst apparatus for purifying an exhaust gas by oxidizing and purifying particulate matter contained in the exhaust gas of an internal combustion engine using a catalyst comprising a composite metal oxide.

### Description of the Related Art

Conventionally, oxidation catalyst apparatuses for purifying an exhaust gas having a catalyst comprising a perovskite type composite metal oxide, which is supported on a porous filter base material having a plurality of cells consisting of penetrating holes running therethrough in the axis direction and allowing boundary parts of respective cells to be cell partition walls, for oxidizing and purifying particulate matter and/or hydrocarbons contained in the exhaust gas of an internal combustion engine are known.

As a perovskite type composite metal oxide for use in the catalyst, for example, composite metal oxides represented by general formula AMO₃, wherein A is at least one kind of metal selected from a group consisting of La, Y, Dy and Nd and at least one kind of metal selected from a group consisting of Sr, Ba and Mg, and M is at least one kind of metal selected from a group consisting of Mn, Fe and Co are known (see Japanese Patent Laid-Open No. 2007-237012).

The oxidation catalyst apparatus for purifying an exhaust gas can be produced, for example, as follows. At first, a precursor to synthesize the perovskite type composite metal oxide is prepared. The precursor is prepared by preparing a raw material salt aqueous solution containing metal salts (a salt of ingredient A and a salt of ingredient M in the general formula AMO₃) constituting the composite metal oxide, mixing the raw material salt aqueous solution with a neutralizing agent to coprecipitate hydroxides of the respective metals and after that, drying the resulted coprecipitate. As the salts of respective metals, inorganic salts such as sulfates, nitrates, phosphates and hydrochlorides, and organic salts such as acetates and oxalates can be used. As the neutralizing agent, inorganic bases such as ammonia, caustic soda and caustic potash, and organic bases such as triethylamine and pyridine can be used. Then, a slurry of the precursor is prepared and the slurry is introduced into the penetrating holes from the openings of the penetrating holes of the porous filter base material, and thereby allowing the precursor to stick within the pores of the porous filter base material. Next, porous catalyst layer consisting of the perovskite type composite metal oxide is formed on the porous filter base material by burning the porous filter base material. Thus, the oxidation catalyst apparatus for purifying an exhaust gas in which a catalyst consisting of a perovskite type composite metal oxide mentioned above is supported can be obtained.

However, the conventional production processes using a slurry containing the precursor prepared by drying the coprecipitate of hydroxides of metals which constitute the composite metal oxide has inconvenience that it is difficult to obtain a porous catalyst layer which can lower the temperature to oxidize the particulate matter.

### SUMMARY OF THE INVENTION

An object of the present invention is to eliminate such inconvenience and to provide a production process of an oxidation catalyst apparatus for purifying an exhaust gas which can oxidize and purify particulate matter in the exhaust gas of the internal combustion engine at a lower temperature.

In order to achieve the object, the production process of an oxidation catalyst apparatus for purifying an exhaust gas of the present invention is a production process of an oxidation catalyst apparatus for purifying an exhaust gas which oxidizes and purifies particulate matter in an exhaust gas of an internal combustion engine using a catalyst comprising a composite metal oxide, the process comprising a step of burning a plurality of metal compounds constituting the composite metal oxide to obtain a burnt product, a step of mixing and grinding the obtained burnt product with water and a binder to prepare a slurry, a step of applying the slurry to a porous filter base material, and a step of burning the porous filter base material to which the slurry has been applied to form a porous catalyst layer comprising the composite metal oxide supported on the porous filter base material.

According to the present invention, a slurry prepared by mixing and grinding the obtained burnt product with water and a binder mentioned above, and thereby an oxidation catalyst apparatus for purifying an exhaust gas which can oxidize and purify particulate matter in the exhaust gas of the internal combustion engine at a lower temperature can be produced. The exhaust gas of the internal combustion engine introduced into the porous filter base material comes in contact with the porous catalyst layer in the oxidation catalyst apparatus for purifying an exhaust gas of an internal combustion engine. At this time, the particulate matter in the exhaust gas is oxidized at a lower temperature and combusted and removed by the action of the catalyst of the porous catalyst layer compared with the oxidation catalyst apparatus for purifying an exhaust gas provided by the conventional production processes.

In addition, it is preferable that the porous catalyst layer has fine pores which have a diameter in a range of 0.01 to 5 µm and that the porous filter base material and porous catalyst layer have a porosity in a range of 35 to 70% as a whole in the present invention. According to such constitution, the temperature to oxidize the particulate matter in the exhaust gas of an internal combustion engine can be surely lowered.

Here, if the diameter of the fine pore of the porous catalyst layer is less than 0.01 µm, there may be a case that pressure loss becomes large when the exhaust gas passes through the fine pores. On the other hand, if the diameter of the fine pore of the porous catalyst layer is more than 5 µm, there may be a case that the particulate matter in the exhaust gas cannot sufficiently contact with the surface of the fine pores of the porous catalyst layer when the exhaust gas passes through the fine pores.

If the porosity of the porous filter base material and the porous catalyst layer is less than 35% as a whole, there may be a case that the temperature to oxidize the particulate matter in the exhaust gas of the internal combustion engine rises. On the other hand, if the porosity of the porous filter base material and the porous catalyst layer is more than 70% as a whole, there may be a case that the particulate matter in the exhaust gas cannot sufficiently contact with the surface of the fine pores of the porous catalyst layer.

In the oxidation catalyst apparatus for purifying an exhaust gas of the present invention, the porous catalyst layer preferably has a thickness in a range of 10 to 150 µm. According to such constitution, the particulate matter in the exhaust gas can be sufficiently combusted and removed by the action of the catalyst of the porous catalyst layer, when the exhaust gas passes through the fine pores of the porous catalyst layer.

Here, if the thickness of the porous catalyst layer is less than 10 µm, there may be a case that the particulate matter in the exhaust gas cannot sufficiently contact with the surface of the fine pores of the porous catalyst layer when the exhaust gas passes through the fine pores. On the other hand, if the thickness of the porous catalyst layer is more than 150 µm, there may be a case that pressure loss becomes large when the exhaust gas passes through the fine pores of the porous catalyst layer.

A plurality of metal compounds preferably comprise a yttrium compound, a manganese compound, a silver compound and a ruthenium compound, and the binder is preferably a sol comprising zirconia in the present invention. The composite metal oxide obtained from the plurality of metal compounds is one in which, in a composite metal oxide represented by general formula YMnO₃, a part of the first metal Y is substituted with the third metal Ag and a part of the second metal Mn is substituted with the fourth metal Ru. The composite metal oxide has a crystal structure which is a mixed crystal of hexagonal crystal and perovskite structures and has a high catalytic activity. Therefore, according to the present invention, the particulate matter in the exhaust gas can be sufficiently combusted and removed by the action of the catalyst of the porous catalyst layer, when the exhaust gas passes through the fine pores of the porous catalyst layer.

The porous catalyst layer preferably comprises a composite metal oxide represented by general formula Y₁-ₓAgₓMn_{1-y}Ru_{y}O₃ wherein 0.01 ≤ x ≤ 0.15 and 0.005 ≤ y ≤ 0.2 in the present invention. According to the present invention, the particulate matter in the exhaust gas can be surely combusted and removed by the action of the catalyst of the porous catalyst layer, when the exhaust gas passes through the fine pores of the porous catalyst layer.

Here, when x is less than 0.01, there may be a case that the effect of enhancing the catalytic activity becomes insufficient. On the other hand, when x is more than 0.15, there may be a case that it becomes difficult to maintain a mixed crystal. In addition, when y is less than 0.005, there may be a case that the effect of enhancing the catalytic activity becomes insufficient. On the other hand, when y is more than 0.2, there may be a case that it becomes difficult to maintain a mixed crystal.

### BRIEF DESCRIPTION OF THE DRAWINGS

FIG. 1 is a cross sectional view of an oxidation catalyst apparatus for purifying an exhaust gas formed according to the production process of an embodiment of the present invention;
FIG. 2 is a graph showing the combustion temperature of particulate matter by the oxidation catalyst apparatus for purifying an exhaust gas of Examples 1 to 11 and Comparative Example;
FIG. 3 is a graph showing the pressure loss by the oxidation catalyst apparatus for purifying an exhaust gas formed according to the production process of Example 1 and Comparative Example;
FIG. 4 is a sectional image of the oxidation catalyst apparatus for purifying an exhaust gas formed according to the production process of Example 1;
FIG. 5 is a graph showing the diameter of the pores of the porous filter base material and the diameter of the fine pores of the porous catalyst layer of the oxidation catalyst apparatus for purifying an exhaust gas formed according to the production process of Example 1 and Comparative Example;
FIG. 6 is a graph showing the porosity of the porous filter base material and the porous catalyst layer as a whole of the oxidation catalyst apparatus for purifying an exhaust gas formed according to the production process of Examples 1 to 11 and Comparative Example;
FIG. 7 is a graph showing the pressure loss by the oxidation catalyst apparatus for purifying an exhaust gas formed according to the production process of Example 2 and Comparative Example;
FIG. 8 is a sectional image of the oxidation catalyst apparatus for purifying an exhaust gas formed according to the production process of Example 2;
FIG. 9 is a graph showing the diameter of the pores of the porous filter base material and the diameter of the fine pores of the porous catalyst layer of the oxidation catalyst apparatus for purifying an exhaust gas formed according to the production process of Example 2 and Comparative Example;
FIG. 10 is a graph showing the pressure loss by the oxidation catalyst apparatus for purifying an exhaust gas formed according to the production process of Example 3 and Comparative Example;
FIG. 11 is a sectional image of the oxidation catalyst apparatus for purifying an exhaust gas formed according to the production process of Example 3;
FIG. 12 is a graph showing the diameter of the pores of the porous filter base material and the diameter of the fine pores of the porous catalyst layer of the oxidation catalyst apparatus for purifying an exhaust gas formed according to the production process of Example 3 and Comparative Example;
FIG. 13 is a graph showing the pressure loss by the oxidation catalyst apparatus for purifying an exhaust gas formed according to the production process of Example 4 and Comparative Example;
FIG. 14 is a sectional image of the oxidation catalyst apparatus for purifying an exhaust gas formed according to the production process of Example 4;
FIG. 15 is a graph showing diameter of the pores of the porous filter base material and the diameter of the fine pores of the porous catalyst layer of the oxidation catalyst apparatus for purifying an exhaust gas formed according to the production process of Example 4 and Comparative Example;
FIG. 16 is a graph showing the pressure loss by the oxidation catalyst apparatus for purifying an exhaust gas formed according to the production process of Example 5 and Comparative Example;
FIG. 17 is a sectional image of the oxidation catalyst apparatus for purifying an exhaust gas formed according to the production process of Example 5;
FIG. 18 is a graph showing the diameter of the pores of the porous filter base material and the diameter of the fine pores of the porous catalyst layer of the oxidation catalyst apparatus for purifying an exhaust gas formed according to the production process of Example 5 and Comparative Example;
FIG. 19 is a graph showing the pressure loss by the oxidation catalyst apparatus for purifying an exhaust gas formed according to the production process of Example 6 and Comparative Example;
FIG. 20 is a sectional image of the oxidation catalyst apparatus for purifying an exhaust gas formed according to the production process of Example 6;
FIG. 21 is a graph showing the diameter of the pores of the porous filter base material and the diameter of the fine pores of the porous catalyst layer of the oxidation catalyst apparatus for purifying an exhaust gas formed according to the production process of Example 6 and Comparative Example;
FIG. 22 is a graph showing the pressure loss by the oxidation catalyst apparatus for purifying an exhaust gas of Example 7 and Comparative Example;
FIG. 23 is a sectional image of the oxidation catalyst apparatus for purifying an exhaust gas formed according to the production process of Example 7;
FIG. 24 is a graph showing the diameter of the pores of the porous filter base material and the diameter of the fine pores of the porous catalyst layer of the oxidation catalyst apparatus for purifying an exhaust gas formed according to the production process of Example 7 and Comparative Example;
FIG. 25 is a graph showing the pressure loss by the oxidation catalyst apparatus for purifying an exhaust gas formed according to the production process of Example 8 and Comparative Example;
FIG. 26 is a sectional image of the oxidation catalyst apparatus for purifying an exhaust gas formed according to the production process of Example 8;
FIG. 27 is a graph showing the diameter of the pores of the porous filter base material and the diameter of the fine pores of the porous catalyst layer of the oxidation catalyst apparatus for purifying an exhaust gas formed according to the production process of Example 8 and Comparative Example;
FIG. 28 is a graph showing the pressure loss by the oxidation catalyst apparatus for purifying an exhaust gas formed according to the production process of Example 9 and Comparative Example;
FIG. 29 is a sectional image of the oxidation catalyst apparatus for purifying an exhaust gas formed according to the production process of Example 9;
FIG. 30 is a graph showing the diameter of the pores of the porous filter base material and the diameter of the fine pores of the porous catalyst layer of the oxidation catalyst apparatus for purifying an exhaust gas formed according to the production process of Example 9 and Comparative Example;
FIG. 31 is a graph showing the pressure loss by the oxidation catalyst apparatus for purifying an exhaust gas formed according to the production process of Example 10 and Comparative Example;
FIG. 32 is a sectional image of the oxidation catalyst apparatus for purifying an exhaust gas formed according to the production process of Example 10;
FIG. 33 is a graph showing the diameter of the pores of the porous filter base material and the diameter of the fine pores of the porous catalyst layer of the oxidation catalyst apparatus for purifying an exhaust gas formed according to the production process of Example 10 and Comparative Example;
FIG. 34 is a graph showing the pressure loss by the oxidation catalyst apparatus for purifying an exhaust gas formed according to the production process of Example 11 and Comparative Example;
FIG. 35 is a sectional image of the oxidation catalyst apparatus for purifying an exhaust gas formed according to the production process of Example 11;
FIG. 36 is a graph showing the diameter of the pores of the porous filter base material and the diameter of the fine pores of the porous catalyst layer of the oxidation catalyst apparatus for purifying an exhaust gas formed according to the production process of Example 11 and Comparative Example; and
FIG. 37 is a sectional image of the oxidation catalyst apparatus for purifying an exhaust gas formed according to the production process of the Comparative Example.

### DETAILED DESCRIPTION OF THE PREFERRED EMBODIMENTS

The embodiments of the present invention will be described in more detail by referring to attached drawings below.

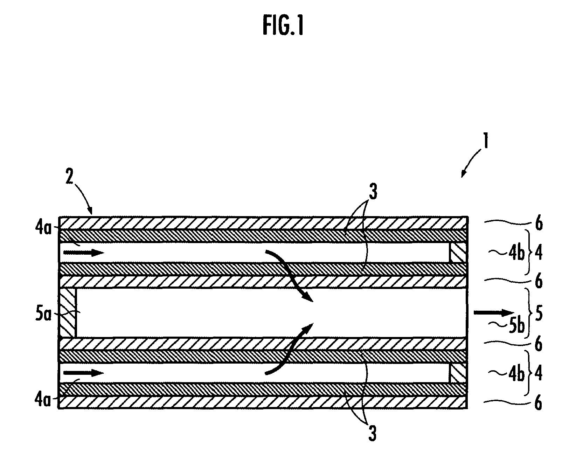

The oxidation catalyst apparatus 1 for purifying an exhaust gas formed according to the production process of the present embodiment is described. The oxidation catalyst apparatus 1 for purifying an exhaust gas of the present embodiment shown in FIG. 1 comprises a porous filter base material 2 having a wall flow structure and a porous catalyst layer 3 supported on the porous filter base material 2 and the apparatus oxidizes and purifies particulate matter contained in the exhaust gas by passing the exhaust gas of the internal combustion engine therethrough.

The porous filter base material 2 comprises SiC porous body in an almost rectangular solid shape in which a plurality of penetrating holes running therethrough in the axis direction are disposed in a grid in cross-sectional view and the material has a plurality of inflow cells 4 and a plurality of outflow cells 5 which are formed of the penetrating holes. The porous filter base material 2 has a plurality of pores (not shown) having a diameter in a range of 1.0 to 200 µm, and has a porosity in a range of 35 to 50% itself. The inflow cell 4 has an opened exhaust gas inflow part 4a and a closed exhaust gas outflow part 4b. On the other hand, the outflow cell 5 has a closed exhaust gas inflow part 5a and an opened exhaust gas outflow part 5b. The inflow cells 4 and outflow cells 5 are alternately disposed so that they may form a checkerboard grid in cross-sectional view and constitute a wall flow structure having boundary parts of respective cells 4 and 5 as cell partition wall 6.

A porous catalyst layer 3 comprising a composite metal oxide represented by general formula Y₁₋ₓAgₓMn_{1-y}Ru_{y}O₃ and 0.01 ≤ x ≤ 0.15 and 0.005 ≤ y ≤ 0.2 is supported on the surface on the inflow cell 4 side of cell partition wall 6. The porous catalyst layer 3 has a thickness in a range of 10 to 150 µm and fine pores (not shown) having a diameter in a range of 0.01 to 5 µm. The total porosity of the porous filter base material 2 and the porous catalyst layer 3 is in a range of 35 to 70% as a whole. In addition, although not shown, a controlling member comprising a metal which controls outflow of the exhaust gas is provided in the circumference part of cell partition wall 6 of the most outer layer.

In the oxidation catalyst apparatus 1 for purifying an exhaust gas of the present embodiment, the porous catalyst layer 3 is supported only on the surface on the side of the inflow cell 4 of cell partition wall 6, but the layer 3 may be supported on both the surfaces on the inflow cell 4 side and on the outflow cell 5 side. A material comprising SiC porous body is used as a porous filter base material 2 but a material comprising Si-SiC porous body may be also used.

The oxidation catalyst apparatus 1 for purifying an exhaust gas consisting of the above constitution can be produced, for example, as follows. At first, a mixture consisting of yttrium nitrate, silver nitrate, manganese nitrate and ruthenium nitrate is subjected to the first burning at a temperature in a range of 200 to 400°C for a period in a range of 1 to 10 hours. Then the resulted mixture water and a sol comprising zirconia as a binder were mixed and ground to prepare a slurry.

Then, a SiC porous body in which a plurality of penetrating holes running therethrough in the axis direction are disposed in a grid in cross-sectional view is prepared. As a SiC porous body, for example, SD031 (product name) produced by Ibiden Co., Ltd. shown in Table 1 can be used. Then, one end parts of the penetrating holes of the SiC porous body are alternately closed with a ceramic adhesive mainly composed of silica (that is, in a kind of a checkerboard grid in a cross-sectional view) to form inflow cells 5. Then, the slurry is poured into the SiC porous body from the side where closed ends are present and thereby, the slurry is passed through a plurality of the penetrating holes with no closed ends (that is, cells other than the inflow cells 5). Subsequently, the excessive slurry is removed from the SiC porous body.

**[Table 1]**

| | |
|---|---|
| Dimensions (mm) | 36×36×50 |
| Apparent volume (mm³) | 65000 |
| Diameter of pores (µm) | 11 |
| Porosity(%) | 42 |

Then, the SiC porous body is subjected to the second burning at a temperature in a range of 800 to 1000°C for a period in a range of 1 to 10 hours to form a porous catalyst layer 3 consisting of a composite metal oxide Y₁₋ₓAgₓMn_{1-y}Ru_{y}O₃ (provided that 0.01 ≤ x ≤ 0.15 and y ≤ 0.2) on the surface of each of the cell partition walls 6 of the cells other than the outflow cells 5. Here, the porous catalyst layer 3 is formed so as to have fine pores (not shown) having a diameter in a range of 0.01 to 5 µm and a thickness in a range of 10 to 150 µm as a result of the second burning at the temperature and hours of the above-mentioned range. Next, the end parts of the cells other than the outflow cells 5 on the opposite side to the side where the end parts of the cells are closed are alternately closed with a ceramic adhesive mainly composed of silica to form inflow cells 4. The oxidation catalyst apparatus 1 for purifying an exhaust gas produced in this way is formed so that the total porosity of the porous filter base material 2 and the porous catalyst layer 3 may be in a range of 35 to 70% as a whole.

Next, the operation of oxidation catalyst apparatus 1 for purifying an exhaust gas formed according to the production process of the present embodiment is described by referring to FIG. 1. At first, the oxidation catalyst apparatus 1 for purifying an exhaust gas is placed so that the exhaust gas inflow parts 4a and 5a of the inflow cell 4 and outflow cell 5 may be positioned upstream in the exhaust gas flow path of the internal combustion engine. The exhaust gas is introduced from the exhaust gas inflow part 4a of the inflow cell 4 into the inflow cell 4. At this time, the exhaust gas is not introduced into the outflow cell 5 since the exhaust gas inflow part 5a of the outflow cell 5 is closed.

Subsequently, the exhaust gas introduced into the inflow cell 4 moves into the outflow cell 5 through the fine pores of the porous catalyst layer 3 supported on the surface of the cell partition wall 6 and pores of the cell partition wall 6 of the porous filter base material 2 since the exhaust gas outflow part 4b of the inflow cell 4 is closed. When the exhaust gas flows through the fine pores of the porous catalyst layer 3, particulate matter in the exhaust gas contacts with the surface of the fine pores, and it is combusted and removed by the action of the catalyst of the porous catalyst layer 3.

And the exhaust gas which has moved into the outflow cell 5 is discharged from the exhaust gas outflow part 5b since the exhaust gas inflow part 5a of the outflow cell 5 is closed whereas the exhaust gas outflow part 5b is opened. Thus, the oxidation catalyst apparatus 1 for purifying an exhaust gas of the present embodiment can oxidize and purify the particulate matter in the exhaust gas of an internal combustion engine.

Since the diameter of the fine pore of porous catalyst layer 3 is in a range of 0.01 to 5 µm, and the total porosity of the porous filter base material 2 and the porous catalyst layer 3 as a whole is in a range of 35 to 70% in the oxidation catalyst apparatus 1 for purifying an exhaust gas in which the slurry prepared by mixing and grinding the resulted product obtained by a first burning, water and a binder is subjected to a second burning, it is enabled to lower the temperature to oxidize the particulate matter in the exhaust gas of an internal combustion engine than one having a porosity less than 35%.

In addition, since the porous catalyst layer 3 has a thickness in a range of 10 to 150 µm in the oxidation catalyst apparatus 1 for purifying an exhaust gas formed according to the production process of the present embodiment, it is enable to sufficiently oxidize and purify the particulate matter in the exhaust gas by the action of the catalyst of the porous catalyst layer 3 when the exhaust gas passes through the fine pores of the porous catalyst layer 3.

The porous catalyst layer 3 comprises a composite metal oxide represented by general formula Y₁₋ₓAgₓMn_{1-y}Ru_{y}O₃ wherein 0.01 ≤ x ≤ 0.15 and 0.005 ≤ y ≤ 0.2 in the oxidation catalyst apparatus 1 for purifying an exhaust gas formed according to the production process of the present embodiment. The composite metal oxide is one in which, in a composite metal oxide represented by general formula YMnO₃, a part of the first metal Y is substituted with the third metal Ag and a part of the second metal Mn is substituted with the fourth metal Ru. The crystal structure Y₁₋ₓAgₓMn_{1-y}Ru_{y}O₃ by this substitution becomes a mixed crystal of hexagonal crystal and perovskite structures and has a high catalytic activity. Therefore, according to in the oxidation catalyst apparatus 1 for purifying an exhaust gas of the present embodiment, the particulate matter in said exhaust gas can be sufficiently combusted and removed by the action of the catalyst of the porous catalyst layer 3 when the exhaust gas passes through the fine pores of the porous catalyst layer 3.

Examples of the present invention and Comparative Example are shown below.

### [Example 1]

In this Example, the oxidation catalyst apparatus 1 for purifying an exhaust gas was produced as follows. At first, yttrium nitrate, silver nitrate, manganese nitrate, ruthenium nitrate, malic acid and water were prepared so that they were in a molar ratio of 0.95:0.05:0.95:0.05:6:40 and mixed in a mortar at a temperature of 25°C for 15 minutes, and after that, the first burning was performed at a temperature of 350°C for one hour. Then, the resulted product by the first burning, water and a commercial aqueous dispersion zirconia sol as a binder were weighed so that they were in a weight ratio of 10:100:10 and ground in a rotary ball mill at 100 rounds per minute for five hours to prepare a catalyst precursor slurry.

Then, a SiC porous body (product name SD031 produced by Ibiden Co., Ltd.) in which a plurality of penetrating holes running therethrough in the axis direction are disposed in a grid in cross-sectional view was prepared, and one end parts of the penetrating holes of the SiC porous body were alternately closed with a ceramic adhesive mainly composed of silica (that is, in a kind of a checkerboard grid in a cross-sectional view) to form outflow cells 5. Then, the catalyst precursor slurry was poured into the SiC porous body from the side where the ends were closed and thereby, the slurry was allowed to flow within a plurality of the penetrating holes with no closed ends (that is, cells other than the outflow cells 5). Subsequently, the excessive slurry was removed from the SiC porous body.

Then, the SiC porous body was subjected to the second burning at a temperature of 850°C for one hour to form a porous catalyst layer 3 consisting of a composite metal oxide Y_{0.95}Ag_{0.05}Mn_{0.95}Ru_{0.05}O₃ on the surface of the penetrating holes with no closed ends so that the loading amount was 100 g/1 L of apparent volume. Next, by closing the opposite end to the side where the end parts of the cells other than outflow cells 5 were closed with a ceramic adhesive mainly composed of silica to form inflow cells 4, the oxidation catalyst apparatus 1 for purifying an exhaust gas was completed.

Then, catalytic performance evaluation test was performed on the oxidation catalyst apparatus 1 for purifying an exhaust gas obtained in this Example as follows. At first, the oxidation catalyst apparatus 1 for purifying an exhaust gas was mounted on the discharging system of an engine bench on which a diesel engine of a displacement volume of 2,400 cc was mounted. Then, the diesel engine was run for 20 minutes under an atmosphere gas containing particulate matter with the inflow temperature of the atmosphere gas to the oxidation catalyst apparatus 1 for purifying an exhaust gas being 180°C, the rotating speed of the engine being 1,500 rounds per minute, and the torque being 70 N/m and thereby 2 g per 1 L apparent volume of oxidation catalyst apparatus 1 for purifying an exhaust gas was collected.

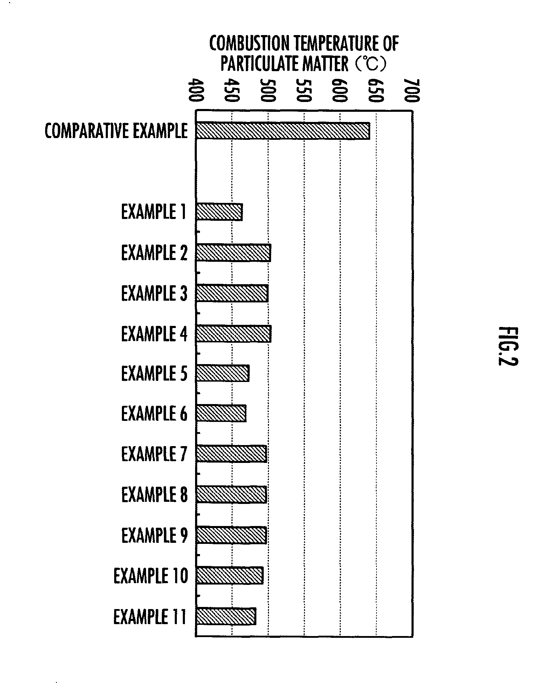

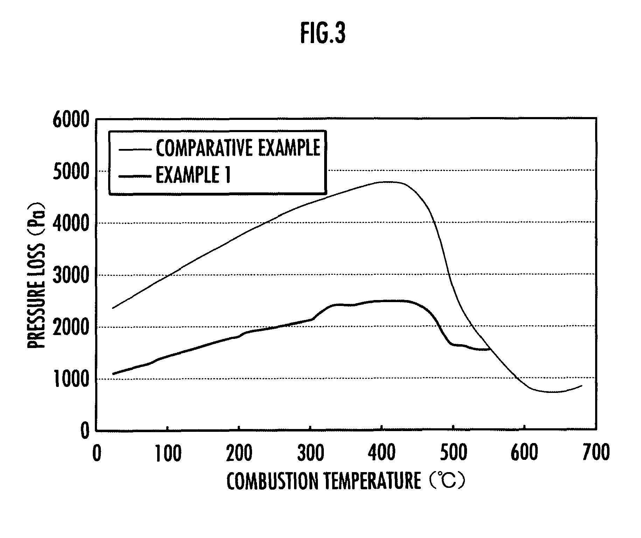

Then, the oxidation catalyst apparatus 1 for purifying an exhaust gas which collected particulate matter was taken out of the exhaust system and fixed in a silica tube which was placed in a circulation type heating device. Next, an atmosphere gas composed of oxygen and nitrogen of 10:90 in volume ratio was supplied from an end part (feed opening) of the silica tube at a space velocity of 20,000/hour, and while the gas was discharged from the other end part (discharge opening) of the silica tube, the oxidation catalyst apparatus 1 for purifying an exhaust gas was heated from room temperature to a temperature of 700°C at a rate of 3°C/min using a tubular muffle furnace of the circulation type heating device. The CO₂ concentration in the exhaust gas from the silica tube was measured with a mass spectrometer at this time, and the combustion temperature of the particulate matter was determined from the peak of CO₂ concentration. The results are shown in FIG. 2. In addition, the pressure loss of oxidation catalyst apparatus 1 for purifying an exhaust gas was also determined by measuring the difference in pressure between the feed opening of the silica tube and discharge opening of the silica tube. The results are shown in FIG. 3.

Then two 5 mm cubes were prepared by cutting the oxidation catalyst apparatus 1 for purifying an exhaust gas of this embodiment with a diamond cutter.

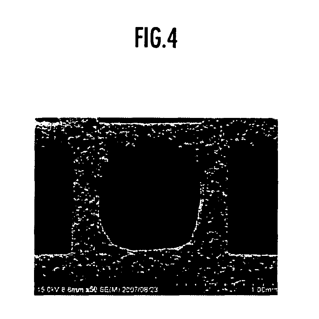

A sectional image of the first cube of the oxidation catalyst apparatus 1 for purifying an exhaust gas was photographed using a transmission electron microscope and the thickness of the porous catalyst layer 3 was measured. The sectional image of the oxidation catalyst apparatus 1 for purifying an exhaust gas is shown in FIG. 4. The thickness of the porous catalyst layer 3 was measured to be 60 µm from FIG. 4.

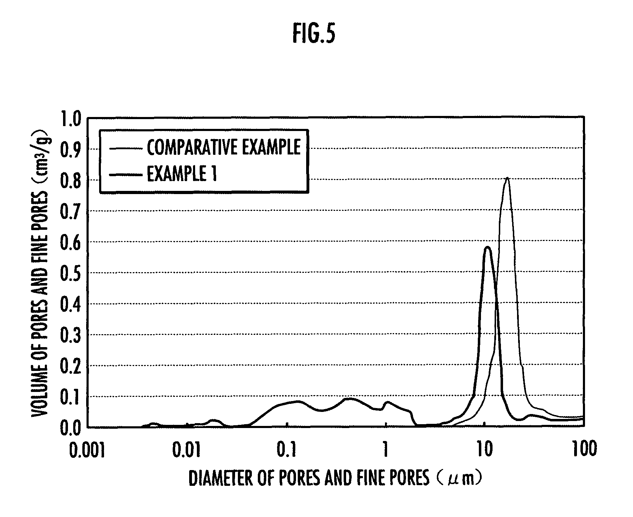

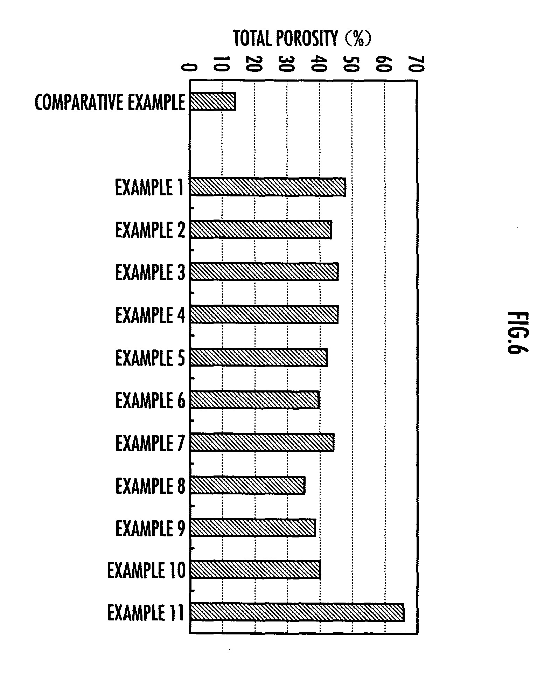

Then, the second cube of the oxidation catalyst apparatus 1 for purifying an exhaust gas was subjected to automatic mercury porosimetry and thereby the diameter of the pores of the porous filter base material 2 and the diameter of the fine pores of the porous catalyst layer 3 and the total porosity of the porous filter base material 2 and the porous catalyst layer 3 as a whole were measured. The results are shown in FIG. 5 and FIG. 6. The diameter of the fine pores was measured to be a range of 0.01 to 2.0 µm from FIG. 5.

### [Example 2]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, malic acid and water were prepared so that they were in a molar ratio of 0.95:0.05:0.95:0.05:3:40.

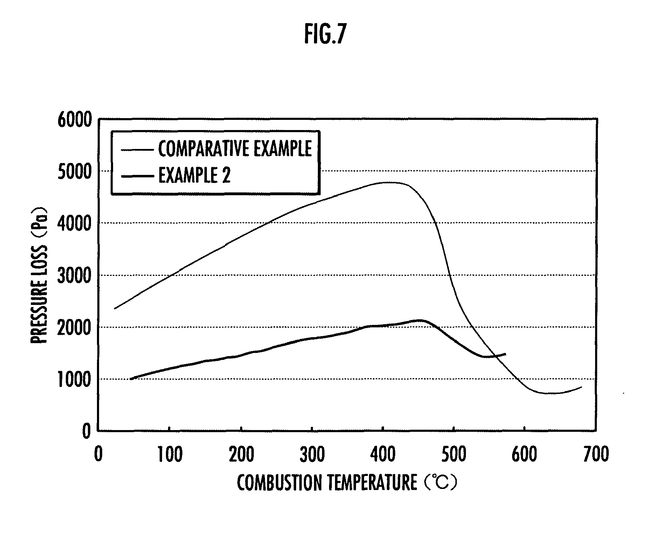

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 7.

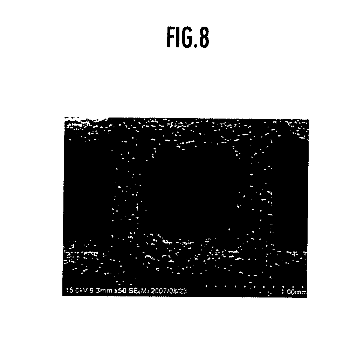

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 8. The thickness of the porous catalyst layer 3 was measured to be 120 µm from FIG. 8.

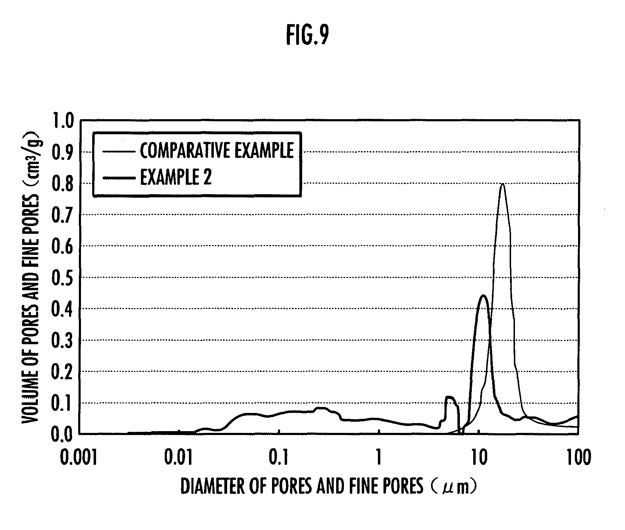

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 9 and FIG. 6. The diameter of the fine pores was measured to be a range of 0.02 to 3.0 µm from FIG. 9.

### [Example 3]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, malic acid and water were prepared so that they were in a molar ratio of 0.95:0.05:0.95:0.05:12:40.

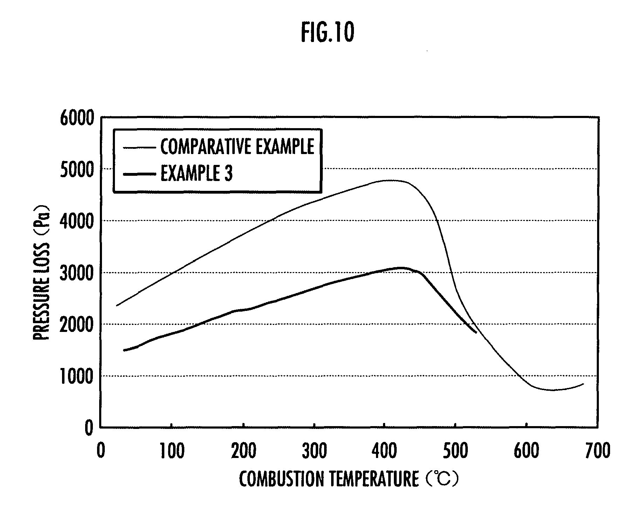

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 10.

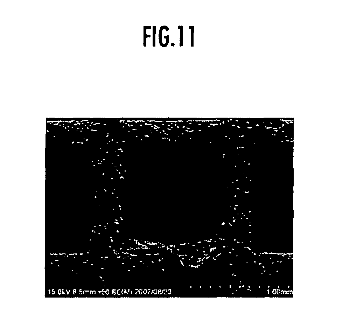

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 11. The thickness of the porous catalyst layer 3 was measured to be 120 µm from FIG. 11.

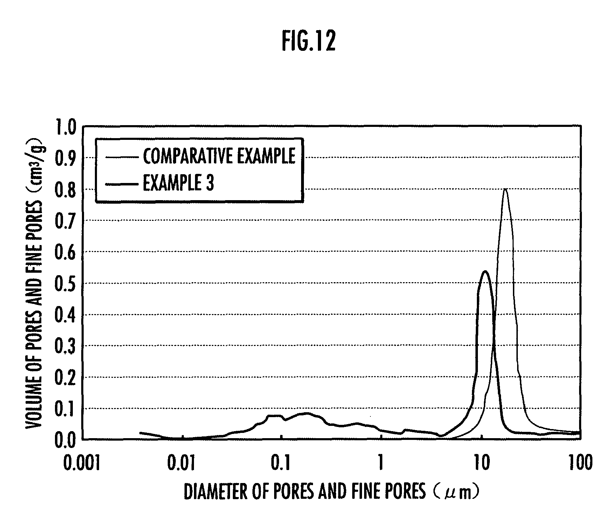

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 12 and FIG. 6. The diameter of the fine pores was measured to be a range of 0.02 to 4.0 µm from FIG. 12.

### [Example 4]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, malic acid and water were prepared so that they were in a molar ratio of 0.95:0.05:0.95:0.05:18:40.

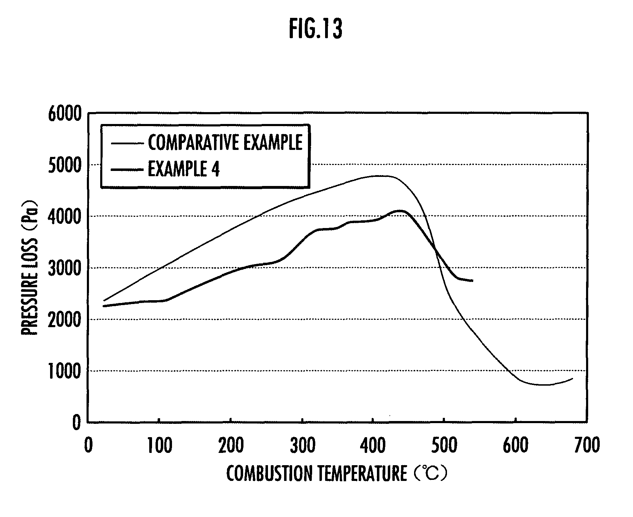

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 13.

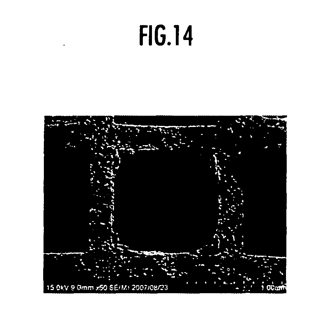

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 14. The thickness of the porous catalyst layer 3 was measured to be 25 µm from FIG. 14.

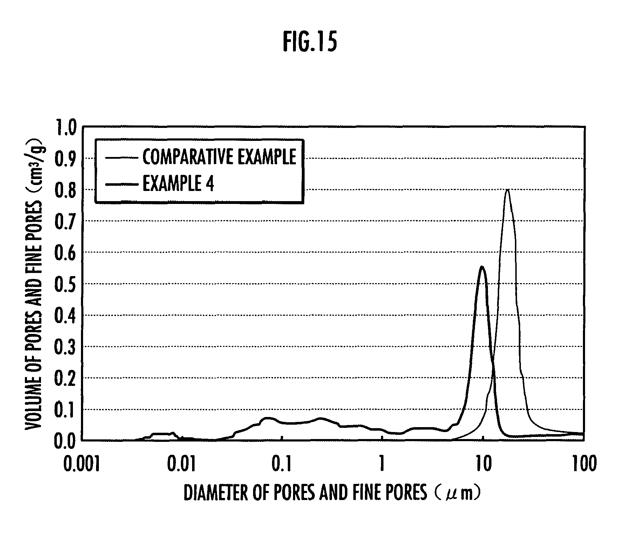

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 15 and FIG. 6. The diameter of the fine pores was measured to be a range of 0.01 to 5.0 µm from FIG. 15.

### [Example 5]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, citric acid and water were prepared so that they were in a molar ratio of 0.95:0.05:0.95:0.05:6:40.

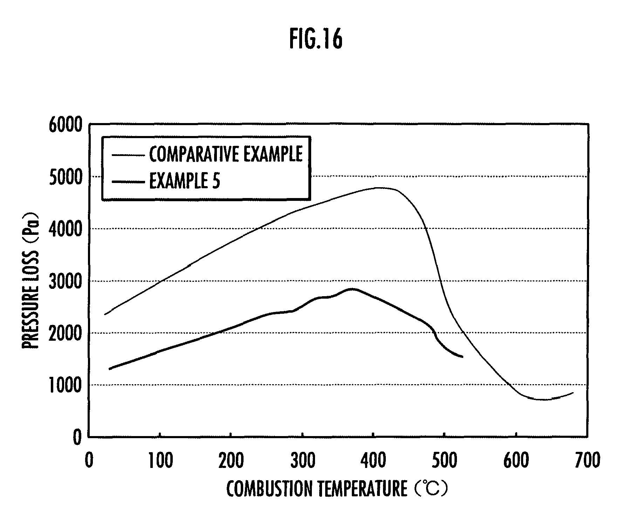

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 16.

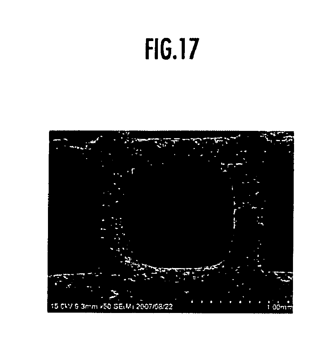

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 17. The thickness of the porous catalyst layer 3 was measured to be 50 µm from FIG. 17.

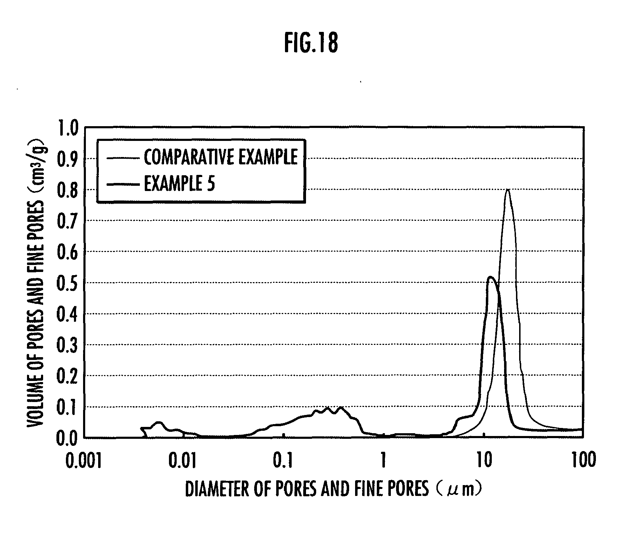

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 18 and FIG. 6. The diameter of the fine pores was measured to be a range of 0.03 to 1.5 µm from FIG. 18.

### [Example 6]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that yttrium nitrate, silver nitrate, manganese nitrate, ruthenium nitrate, urea and water were prepared so that they were in a molar ratio of 0.95:0.05:0.95:0.05:6:40.

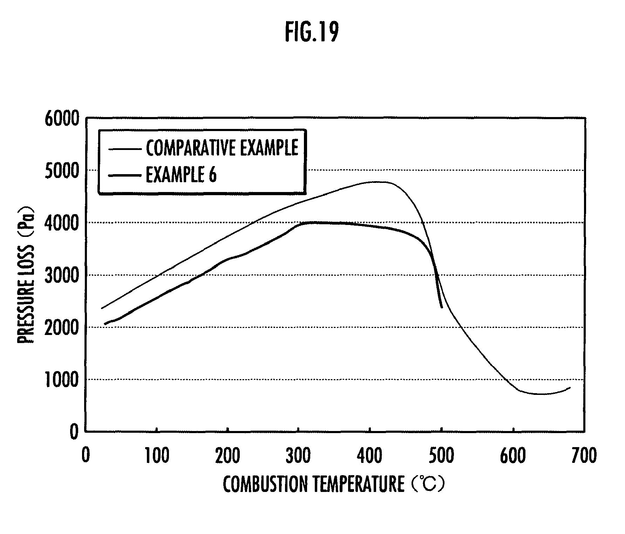

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 19.

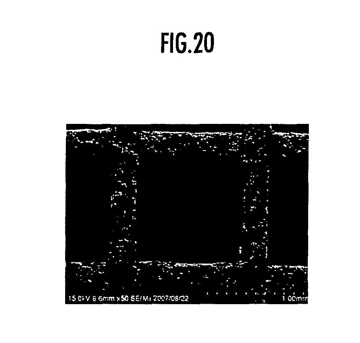

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 20. The thickness of the porous catalyst layer 3 was measured to be 20 µm from FIG. 20.

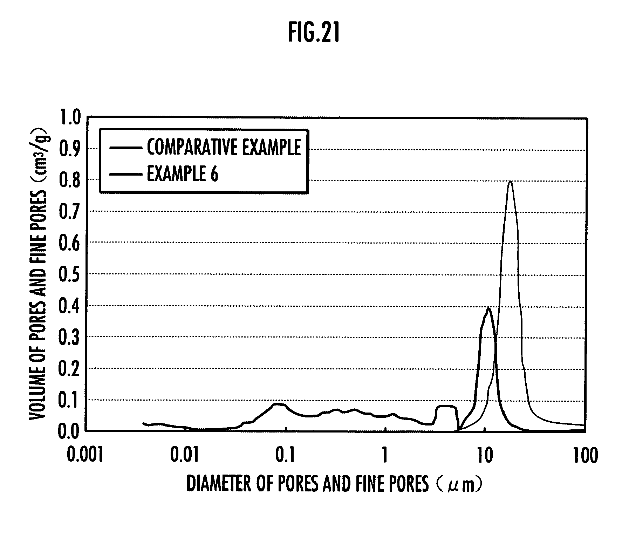

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 21 and FIG. 6. The diameter of the fine pores was measured to be a range of 0.03 to 5.0 µm from FIG. 21.

### [Example 7]

In this Example, the oxidation catalyst apparatus 1 for purifying an exhaust gas having a porous catalyst layer 3 consisting of a composite metal oxide Y_{0.95}Ag_{0.05}Mn_{0,95}Ru_{0.05}O₃ was formed totally in the same manner as in Example 1 except that yttrium nitrate, silver nitrate, manganese nitrate, ruthenium nitrate, glutaminic acid and water were prepared so that they were in a molar ratio of 0.95:0.05:0.95:0.05:6:40.

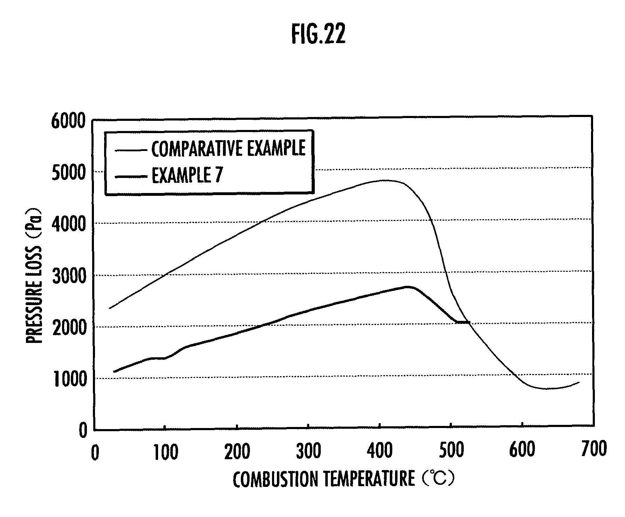

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 22.

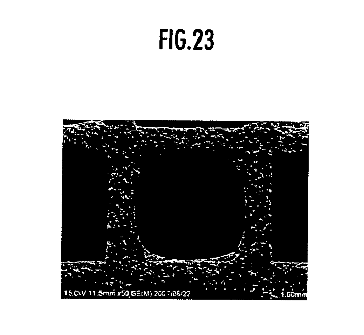

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 23. The thickness of the porous catalyst layer 3 was measured to be 30 µm from FIG. 23.

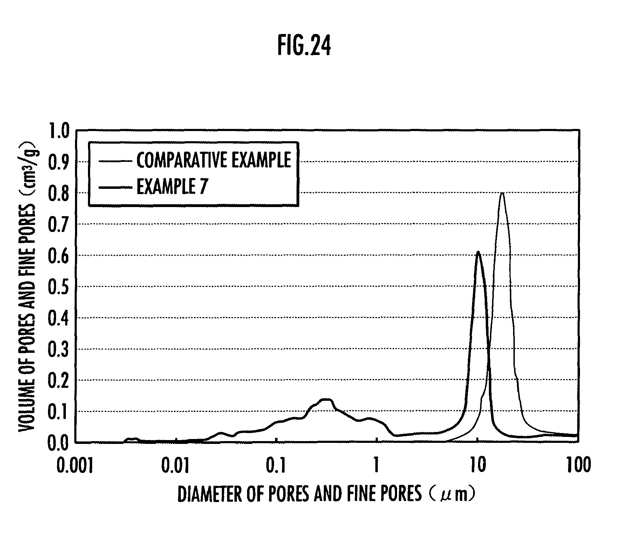

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 24 and FIG. 6. The diameter of the fine pores was measured to be a range of 0.01 to 3.0 µm from FIG. 24.

### [Example 8]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that the loading amount of the porous catalyst layer 3 was 20 g per 1 L of apparent volume.

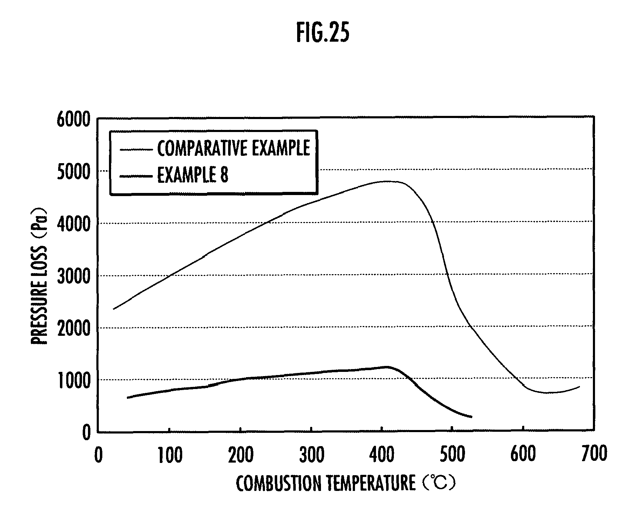

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 25.

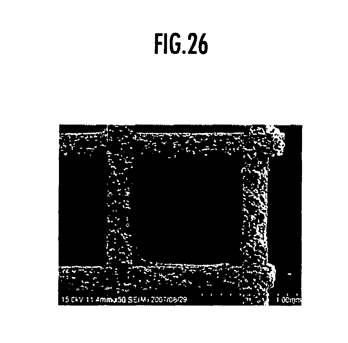

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 26. The thickness of the porous catalyst layer 3 was measured to be 25 µm from FIG. 26.

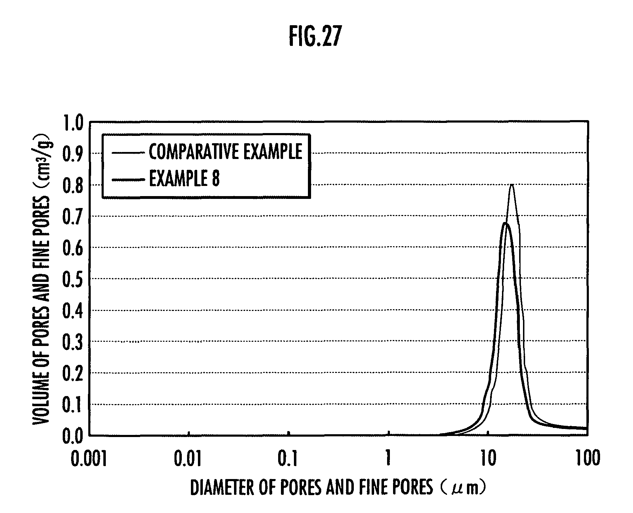

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 27 and FIG. 6. The diameter of the fine pores was measured to be a range of 0.01 to 5.0 µm from FIG. 27.

### [Example 9]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that the loading amount of the porous catalyst layer 3 was 40 g per 1 L of apparent volume.

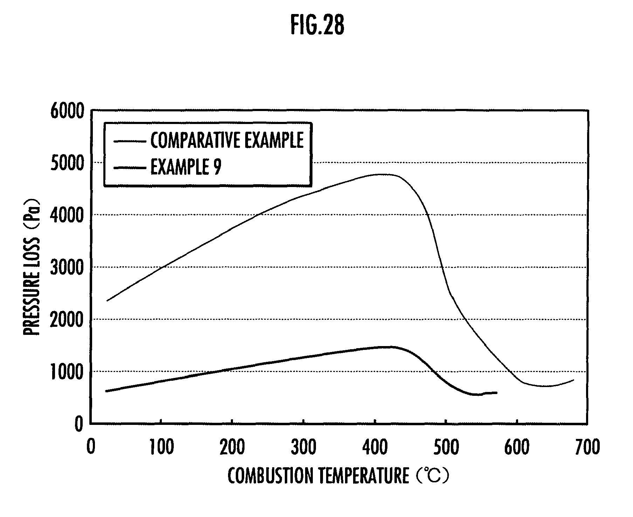

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 28.

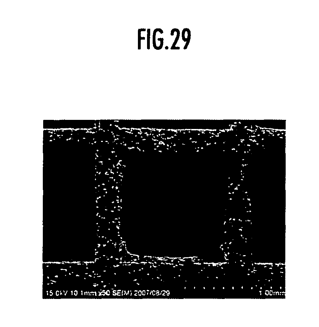

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 29. The thickness of the porous catalyst layer 3 was measured to be 75 µm from FIG. 29.

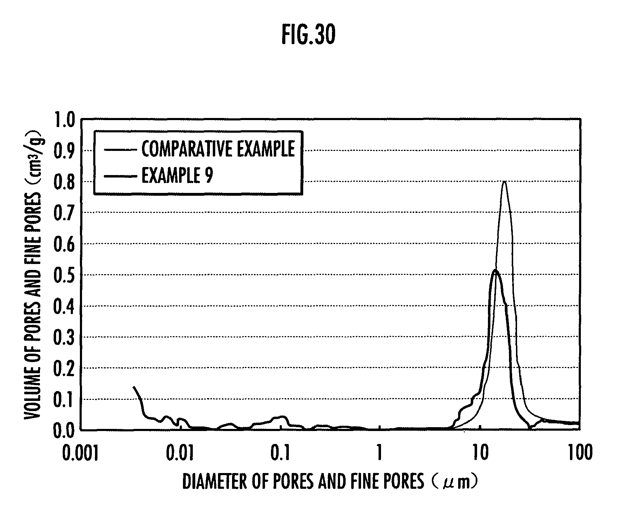

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 30 and FIG. 6. The diameter of the fine pores was measured to be a range of 0.01 to 5.0 µm from FIG. 30.

### [Example 10]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that the loading amount of the porous catalyst layer 3 was 80 g per 1 L of apparent volume.

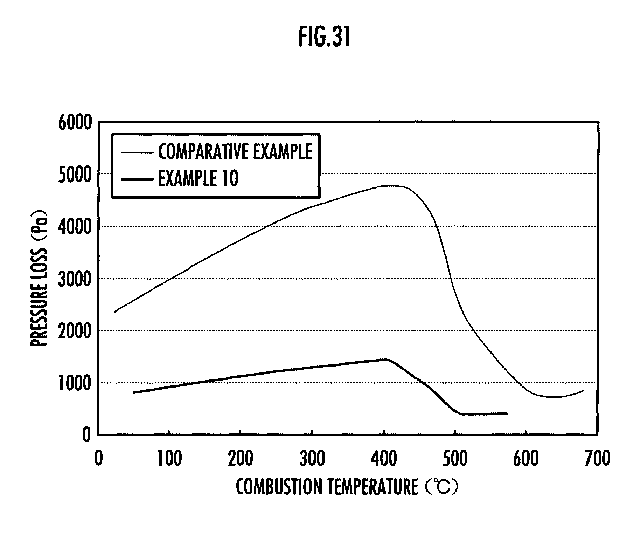

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 31.

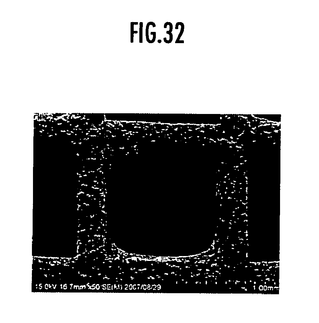

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 32. The thickness of the porous catalyst layer 3 was measured to be 70 µm from FIG. 32.

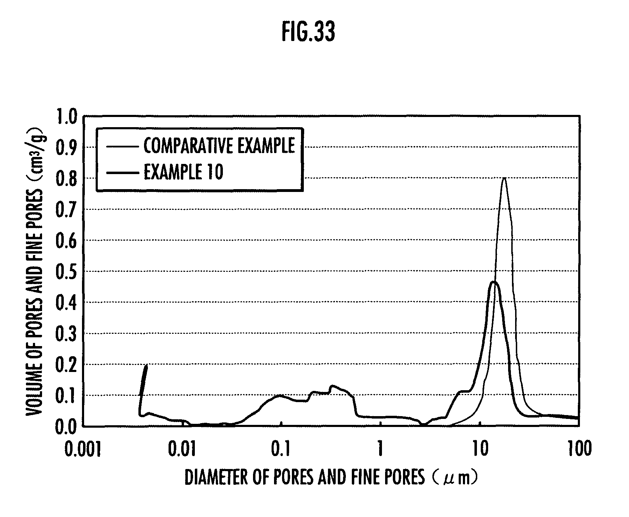

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 33 and FIG. 6. The diameter of the fine pores was measured to be a range of 0.04 to 2.0 µm from FIG. 33.

### [Example 11]

In this Example, the oxidation catalyst apparatus 1 for purifying an exhaust gas having a porous catalyst layer 3 consisting of a composite metal oxide Y_{0.95}Ag_{0.05}Mn_{0.95}Ru_{0.05}O₃ was formed totally in the same manner as in Example 1 except that the loading amount of the porous catalyst layer 3 was 150 g per 1 L of apparent volume.

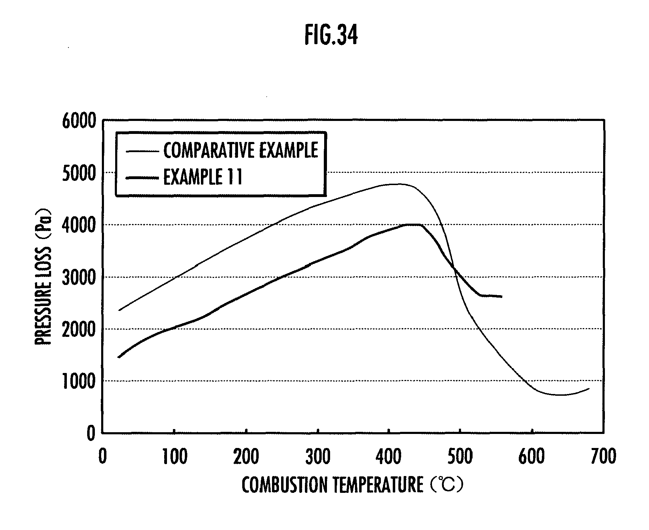

Then, the combustion temperature of particulate matter and the pressure loss of the oxidation catalyst apparatus 1 for purifying an exhaust gas obtained in this Example were determined totally in the same manner as in Example 1. The results are shown in FIG. 2 and FIG. 34.

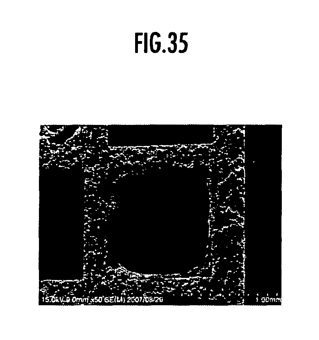

Then, a sectional image of the oxidation catalyst apparatus 1 for purifying an exhaust gas obtained in this Example was photographed and the thickness of the porous catalyst layer 3 was measured totally in the same manner as in Example 1. The sectional image of the oxidation catalyst apparatus 1 for purifying an exhaust gas is shown in FIG. 35. The thickness of the porous catalyst layer 3 was measured to be 80 µm from FIG. 35.

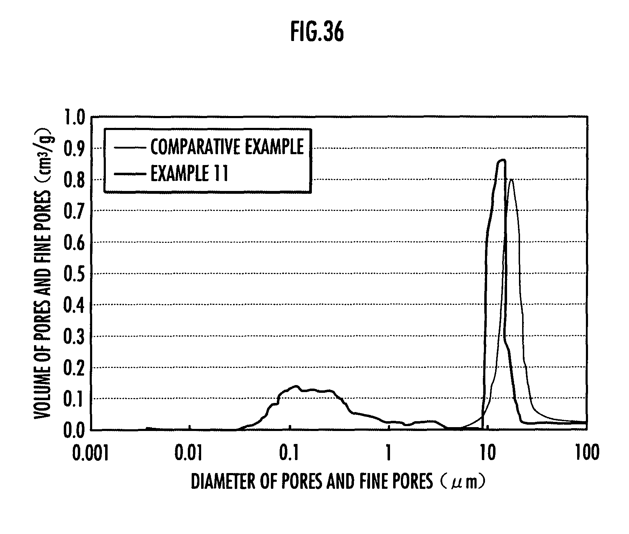

Then, the diameter of the pores of the porous filter base material 2 and the diameter of the fine pores of the porous catalyst layer 3 and the total porosity of the porous filter base material 2 and the porous catalyst layer 3 as a whole were measured for the oxidation catalyst apparatus 1 for purifying an exhaust gas obtained in this Example totally in the same manner as in Example 1. The results are shown in FIG. 36 and FIG. 6. The diameter of the fine pores was measured to be a range of 0.03 to 5.0 µm from FIG. 36.

### [Comparative Example 1]

In this Comparative Example, silver nitrate and ruthenium nitrate were not used at all and yttrium nitrate, manganese nitrate, malic acid and water were prepared at first so that they were in a molar ratio of 1:1:6:40 and mixed in a mortar at a temperature of 25°C for 15 minutes, and after that, the first burning was performed at a temperature of 850°C for one hour. Then, the resulted product by the first burning and water were weighed so that they were in a weight ratio of 10:100 and mixed and ground in a rotary ball mill at 100 rounds per minute for five hours to prepare a catalyst precursor slurry.

Then, the catalyst precursor slurry was allowed to flow within a SiC porous body (product name SD031 produced by Ibiden Co., Ltd., with a dimension of 36 mmx36 mmx50 mm) in the same manner as in Examples, and the excessive slurry was removed from the SiC porous body.

Then, the SiC porous body was subjected to the second burning at a temperature of 600°C for one hour to form a porous catalyst layer consisting of a composite metal oxide YMnO₃ on the surface of the penetrating holes with no closed ends so that the loading amount was 40 g/1 L of apparent volume. Then, inflow cells were formed in the same manner as in Examples. Thus an oxidation catalyst apparatus for purifying an exhaust gas of Comparative Example was produced.

Then, the combustion temperature of particulate matter and the pressure loss of the oxidation catalyst apparatus for purifying an exhaust gas obtained in Comparative Example were determined totally in the same manner as in Example 1. The results are shown in FIGS. 2, 3, 7, 10, 13, 16, 19, 22, 25, 28, 31 and 34.

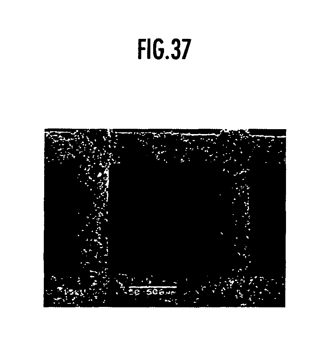

Then, a sectional image of the oxidation catalyst apparatus for purifying an exhaust gas obtained in this Comparative Example was photographed and the thickness of the porous catalyst layer 3'was measured totally in the same manner as in Example 1. The sectional image of the oxidation catalyst apparatus 1 for purifying an exhaust gas is shown in FIG. 37. According to FIG. 37, the interface between the porous filter base material and the porous catalyst layer cannot be recognized and it is clear that no definite porous catalyst layer is formed.

Then, the diameter of the pores of the porous filter base material 2 and the total porosity of the porous filter base material 2 and the porous catalyst layer 3 as a whole were measured for the oxidation catalyst apparatus for purifying an exhaust gas obtained in this Comparative Example totally in the same manner as in Example 1. The results are shown in FIGS. 5, 9, 12, 15, 18, 21, 24, 27, 30, 33, 36 and FIG. 6.

It is clear from FIGS. 4, 8, 11, 14, 17, 20, 23, 26, 29, 32, 35, 37 that the diameter of the fine pores of the porous catalyst layer 3 is in a range of 0.01 to 5 µm in ach of the oxidation catalyst apparatus 1 for purifying an exhaust gas formed according to the production process of Examples 1 to 11 whereas no porous catalyst layer 3 is formed in the oxidation catalyst apparatus for purifying an exhaust gas formed according to the production process of Comparative Example. In addition, it is clear from FIG. 6 that the total porosity of the porous filter base material 2 and the porous catalyst layer 3 as a whole is in a range of 30 to 70% in each of the oxidation catalyst apparatus 1 for purifying an exhaust gas of Examples 1 to 11 whereas the total porosity of the porous filter base material in the oxidation catalyst apparatus for purifying an exhaust gas formed according to the production process of Comparative Example is less than 30%.

It is also clear from FIG. 2 that the particulate matter can be oxidized (combusted) at a lower temperature according to each of the oxidation catalyst apparatus 1 for purifying an exhaust gas formed according to the production process of Examples 1 to 11 as compared with the oxidation catalyst apparatus for purifying an exhaust gas formed according to the production process of Comparative Example comprising a composite metal oxide YMnO₃ in which the total porosity of the porous filter base material and the porous catalyst layer as a whole is less than 30%.

In addition, it is also clear from FIGS. 3, 7, 10, 13, 16, 19, 22, 25, 28, 31 and 34 that according to oxidation catalyst apparatus 1 for purifying an exhaust gas formed according to the production process of Examples 1 to 11, the pressure loss is smaller at a temperature in a range of 0 to 500°C in all the Examples except for Example 4 and Example 11 as compared with the oxidation catalyst apparatus for purifying an exhaust gas formed according to the production process of Comparative Example.

To provide a production process of an oxidation catalyst apparatus for purifying an exhaust gas which enables to oxidize and purify particulate matter in the exhaust gas of an internal combustion engine at a lower temperature. The production process of the oxidation catalyst apparatus 1 for purifying an exhaust gas comprises a step of burning a plurality of metal compounds to obtain a burnt product, a step of mixing and grinding the obtained burnt product with water and a binder which is a sol comprising zirconia to prepare a slurry, a step of applying the slurry to a porous filter base material 2, and a step of burning the porous filter base material 2 to form a porous catalyst layer 3 supported on the porous filter base material 2. The porous catalyst layer 3 has a thickness in a range of 10 to 150 µm and fine pores having a diameter in a range of 0.01 to 5 µm, the total porosity of and the porous filter base material 2 and the porous catalyst layer 3 have a porosity of 35 to 70% as a whole. The porous catalyst layer 3 is a composite metal oxide represented by general formula Y₁₋ₓAgₓMn_{1-y}Ru_{y}O₃ wherein 0.01 ≤ x ≤ 0.15 and 0.005 ≤ y ≤ 0.2.

## Claims

1. A production process of an oxidation catalyst apparatus for purifying an exhaust gas by oxidizing particulate matter in an exhaust gas of an internal combustion engine using a catalyst comprising a composite metal oxide, the process comprising:
a step of burning a plurality of metal compounds constituting the composite metal oxide to obtain a burnt product;
a step of mixing and grinding the obtained burnt product with water and a binder to prepare a slurry;
a step of applying the slurry to a porous filter base material; and
a step of burning the porous filter base material to which the slurry has been applied to form a porous catalyst layer comprising the composite metal oxide supported on the porous filter base material.

2. The production process of an oxidation catalyst apparatus for purifying an exhaust gas according to claim 1, wherein the porous catalyst layer has fine pores having a diameter in a range of 0.01 to 5 µm and the porous filter base material and the porous catalyst layer have a porosity of 35 to 70% as a whole.

3. The production process of an oxidation catalyst apparatus for purifying an exhaust gas according to claim 2, wherein the porous catalyst layer has fine pores having a diameter in a range of 0.01 to 2 µm and the porous filter base material and the porous catalyst layer have a porosity of 35 to 50% as a whole.

4. The production process of an oxidation catalyst apparatus for purifying an exhaust gas according to claim 1, wherein the porous catalyst layer has a thickness in a range of 10 to 150 µm.

5. The production process of an oxidation catalyst apparatus for purifying an exhaust gas according to claim 4, wherein the porous catalyst layer has a thickness in a range of 50 to 60 µm.

6. The production process of an oxidation catalyst apparatus for purifying an exhaust gas according to claim 1, wherein the porous filter base material has pores having a diameter in a range of 1.0 to 200 µm and the porous filter base material has a porosity of 35 to 50% as a whole.

7. The production process of an oxidation catalyst apparatus for purifying an exhaust gas according to claim 1, wherein the porous filter base material is either a SiC porous body or a Si-SiC porous body.

8. The production process of an oxidation catalyst apparatus for purifying an exhaust gas according to claim 1, wherein the plurality of metal compounds comprise a yttrium compound, a manganese compound, a silver compound and a ruthenium compound and the binder is a sol comprising zirconia.

9. The production process of an oxidation catalyst apparatus for purifying an exhaust gas according to claim 8, wherein the yttrium compound is yttrium nitrate, the manganese compound is manganese nitrate, the silver compound is silver nitrate and the ruthenium compound is ruthenium nitrate.

10. The production process of an oxidation catalyst apparatus for purifying an exhaust gas according to claim 8, wherein the sol comprising zirconia is an aqueous dispersion zirconia.

11. The production process of an oxidation catalyst apparatus for purifying an exhaust gas according to claim 1, wherein an organic substance selected from a group consisting of malic acid, citric acid, urea and glutaminic acid is added when the plurality of metal compounds are burnt.

12. The production process of an oxidation catalyst apparatus for purifying an exhaust gas according to claim 1, wherein the porous catalyst layer comprises a composite metal oxide represented by general formula Y₁-ₓAgₓMn_{1-y}Ru_{y}O₃ wherein 0.01 ≤ x ≤ 0.15 and 0.005 ≤ y ≤ 0.2.

13. The production process of an oxidation catalyst apparatus for purifying an exhaust gas according to claim 12, wherein the porous catalyst layer comprises a composite metal oxide represented by general formula Y₁-ₓAgₓMn_{1-y}Ru_{y}O₃ wherein x = 0.05 and y =0.05.
